# FASCICULE DE BREVET EUROPEEN

(11) **EP 3 210 821 B1**
(45) Date de publication et mention de la délivrance du brevet: **18.09.2019**
(21) Numéro de dépôt: 17155790.3
(22) Date de dépôt: 13.02.2017
(51) Int. Cl.: B60N 2/07

(54) **EMBOUT D'EXTREMITE POUR PROFILE COMPORTANT UNE PORTION A SECTION TRANSVERSALE EN FORME DE U**
ENDSTÜCK FÜR PROFIL, DAS EINEN QUERSCHNITTSABSCHNITT IN U-FORM UMFASST
END CAP FOR PROFILE COMPRISING A PORTION WITH A U-SHAPED CROSS SECTION

(30) Priorité: 24.02.2016 FR 1651494
(43) Date de publication de la demande: 30.08.2017
(73) Titulaire: PSA Automobiles SA, 78300 Poissy (FR)
(72) Inventeur: RICHARD, Olivier, 68130 Wittersdorf (FR)

(56) Documents cités:
- FR-A1- 2 746 721
- FR-A1- 3 017 831
- US-A1- 2015 090 853

## Description

### Domaine de l'invention

La présente invention concerne d'une manière générale le domaine de la fermeture des deux extrémités d'un profilé métallique, et en particulier d'une piste de glissement pour console centrale d'habitacle de véhicule automobile.

### Arrière-plan de l'invention

L'utilisation de profilés métalliques est particulièrement courante dans l'industrie, notamment dans le domaine automobile.

De tels profilés sont ainsi par exemple utilisés pour former les rails des glissières de coulissement des sièges et consoles montés sur le plancher des véhicules automobiles, ou bien encore pour constituer les pistes de glisse métalliques de ces mêmes consoles.

Les extrémités longitudinales de ces profilés présentent généralement des angles saillants qui peuvent occasionner des blessures aux utilisateurs et endommager les objets disposés à proximité sur le plancher du véhicule. En outre, lorsqu'elles sont visibles, ces extrémités ont tendance à impacter négativement l'impression de qualité ressentie par l'utilisateur.

Afin d'améliorer l'aspect esthétique de ces extrémités de profilés et d'en réduire l'agressivité, des embouts spécifiques ont été développés ces dernières années.

Ainsi, on connaît un premier type d'embout comportant une paroi frontale apte à couvrir l'une des surfaces frontales d'extrémité d'un rail fixe de glissière, ainsi que deux languettes saillant transversalement à cette paroi frontale et aptes à coulisser le long des faces internes des deux ailes latérales du rail lors de la mise en place de l'embout.

La fixation de l'embout sur l'extrémité du rail est assurée grâce à une goupille traversant transversalement les ailes latérales du rail et les languettes au niveau de quatre orifices de passage ménagés dans ces éléments et alignés transversalement.

Toutefois, du fait des tolérances dans la chaîne de côtes, un jeu longitudinal perdure systématiquement entre l'embout et la surface frontale d'extrémité correspondante du rail ce qui dégrade l'aspect esthétique recherché.

La demande française FR 2 746 721 décrit un autre type d'embout dont la fixation sur l'extrémité du rail est réalisée grâce à la coopération entre une languette que comporte l'embout et des taquets formés par des pattes découpées par poinçonnage dans les montants latéraux du rail et reliées l'une vers l'autre, de manière à définir une distance donnée entre les pattes et la traverse de fond de ce rail.

La languette qui s'étend à partir du bas de la paroi frontale de l'embout et perpendiculairement à cette dernière, comporte, sur sa face supérieure, des stries orientées parallèlement à cette paroi frontale.

L'épaisseur totale de la languette est légèrement supérieure à la distance séparant les taquets et la traverse de fond du rail, de sorte que, lors du montage de l'embout sur ce rail, les stries sont déformées élastiquement par ces taquets ce qui assure le maintien de cet embout.

On connait également d'autres types d'embouts comportant un pion de fixation déformable élastiquement qui est encliqueté à force dans une ouverture située dans la traverse de fond du rail fixe ou dans l'un de ses deux montants latéraux.

Ces solutions présentent cependant l'inconvénient de nécessiter au préalable certaines opérations d'adaptation sur les profilés (réalisation de taquets découpés par poinçonnage dans les montants latéraux du rail pour l'un, et perçage d'ouvertures dans la traverse de fond du rail pour l'autre), ce qui entraine des surcoûts de production non négligeables.

### Objet et résumé de l'invention

La présente invention vise donc à proposer une fixation sans jeu longitudinal de l'embout sur l'extrémité d'un tel profilé et ne nécessitant aucune adaptation particulière sur ce profilé.

Elle propose à cet effet, un embout d'extrémité pour profilé comportant au moins une portion à section transversale en forme de U comprenant une base et deux ailes parallèles s'étendant transversalement à la dite base, ledit embout comportant un corps comprenant une paroi frontale apte à couvrir une surface frontale d'extrémité de ladite portion en U ;
caractérisé en ce que ledit embout comporte un organe de fixation comprenant une tige portant un filetage auto-taraudant et apte à traverser un orifice circulaire ménagé dans ladite paroi frontale pour venir se visser sur les faces internes desdites ailes de la portion en U du profilé, ledit organe de fixation comprenant également une tête dotée d'un diamètre supérieur à celui dudit orifice et prévue pour venir en butée contre ladite paroi frontale en fin de vissage.

L'embout selon l'invention permet ainsi d'assurer un positionnement longitudinal particulièrement sûr et sans aucun jeu du corps de cet embout sur l'extrémité du profilé.

Son montage particulièrement simple ne nécessite en outre aucune adaptation particulière sur le profilé, ce qui se révèle particulièrement avantageux d'un point de vue économique.

Selon des caractéristiques préférées de l'embout, prises seules ou en combinaison :
- que ledit corps comporte une cloison s'étendant perpendiculairement à ladite paroi frontale et prévue pour être introduite entre lesdites ailes de la portion en U du profilé ; ladite cloison présentant au niveau de son extrémité proximale une largeur correspondant à la distance séparant lesdites ailes ;
- ladite cloison présente une épaisseur moindre à son extrémité libre de sorte à faciliter l'insertion dudit corps ; et/ou
- ladite cloison présente un perçage borgne prolongeant ledit orifice en formant deux fenêtres latérales dans cette dernière.

L'invention concerne également sous un second aspect, un ensemble comportant un dit profilé ainsi qu'au moins un embout monté à l'une des extrémités dudit profilé ; caractérisé en ce que ledit profilé comporte une seconde portion surplombant la base de ladite portion en U, et en ce que ledit embout comporte un toit s'étendant dans le prolongement de ladite seconde portion du profilé et présentant une surface frontale d'extrémité accolée à celle de ladite seconde portion.

Selon des caractéristiques préférées de l'ensemble, prises seules ou en combinaison :
- ladite surface frontale d'extrémité du toit présente un profil identique à celui de ladite surface frontale d'extrémité de la seconde portion ;
- l'extrémité supérieure de ladite cloison repose contre la face inférieure de ladite base de la portion en U du profilé ;
- chaque dite aile de la portion en U du profilé est prolongée à son extrémité opposée à ladite base par un retour d'équerre s'étendant vers l'extérieur et parallèlement à cette dernière, ledit embout comportant en outre deux joues latérales s'étendant transversalement depuis ladite paroi frontale dudit corps, de part et d'autre de ladite cloison centrale, et dont les extrémités inférieures forment deux redents reposant contre la face supérieure desdits retours d'équerre ;
- ledit corps de l'embout comporte des nervures de renfort s'étendant entre la face inférieure dudit toit et ladite paroi frontale ; et/ou
- ledit profilé constitue une piste de glissement pour console centrale d'habitacle de véhicule automobile.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue partielle en perspective de la partie arrière de l'habitacle d'un véhicule automobile comportant une console centrale montée coulissante le long du plancher de ce véhicule par l'intermédiaire d'une glissière centrale et de deux pistes de glissement latérales implantées dans ce plancher et pourvues d'embouts de finition à leurs extrémités longitudinales ;
- la figure 2 représente une vue en coupe selon le plan longitudinal médian de l'une des deux pistes de glissement de la figure 1 montrée dans sa configuration de service ;
- la figure 3 est une vue une vue en coupe de la piste de glissement de la figure 2 selon le plan transversal III-III ;
- la figure 4 représente une vue en perspective de l'une des extrémités longitudinales de la piste de glissement dépourvue d'embout de finition ;
- la figure 5 est une vue en perspective sous un autre angle d'un embout d'extrémité seul ; et
- la figure 6 représente une vue en perspective de l'extrémité longitudinale de la piste de glissement de la figure 4 sur laquelle est vissée l'embout d'extrémité de la figure 5.

### Description détaillée d'un mode de réalisation

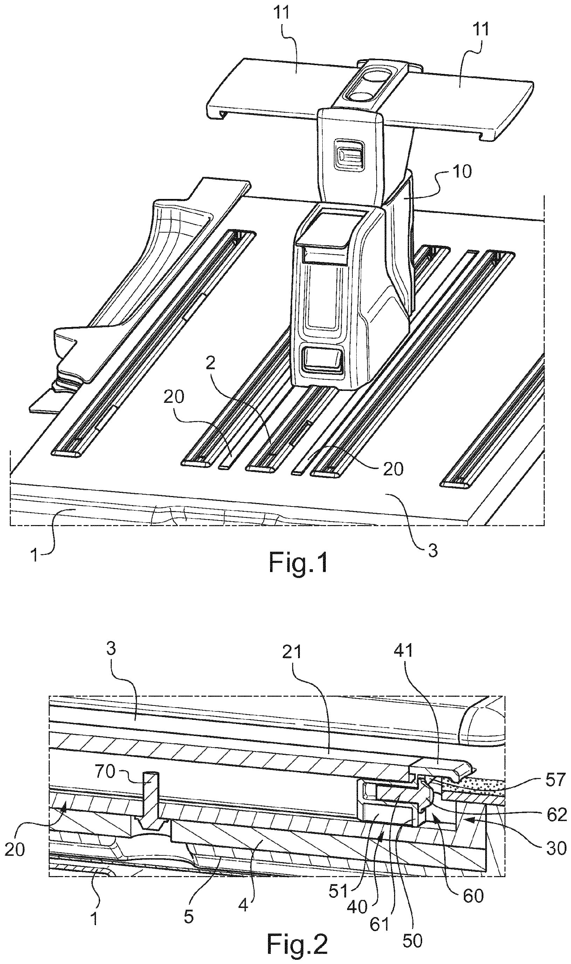

La figure 1 représente une vue partielle en perspective de la partie arrière de l'habitacle d'un véhicule automobile comportant une console centrale 10 comprenant, de manière classique, deux tablettes 11 déplaçables chacune entre une configuration escamotée dans laquelle elle est logée verticalement à l'intérieur d'un compartiment ménagé dans la console 10, et une configuration déployée dans laquelle elle s'étend latéralement et horizontalement en dehors de ce compartiment.

Cette console centrale 10 est montée coulissante sur le plancher 1 du véhicule le long de l'axe longitudinal médian de ce dernier par l'intermédiaire d'une glissière centrale 2 et de deux pistes latérales 20 s'étendant parallèlement de part et d'autre de cette glissière 2.

Ces deux pistes 20 sont destinées à coopérer par glissement avec des patins (non visibles) ménagés sur les deux bords latéraux inférieurs de la console 10 afin que cette dernière ne repose pas en porte à faux sur la seule glissière centrale 2 lorsque l'une des deux tablettes 11 est déployée.

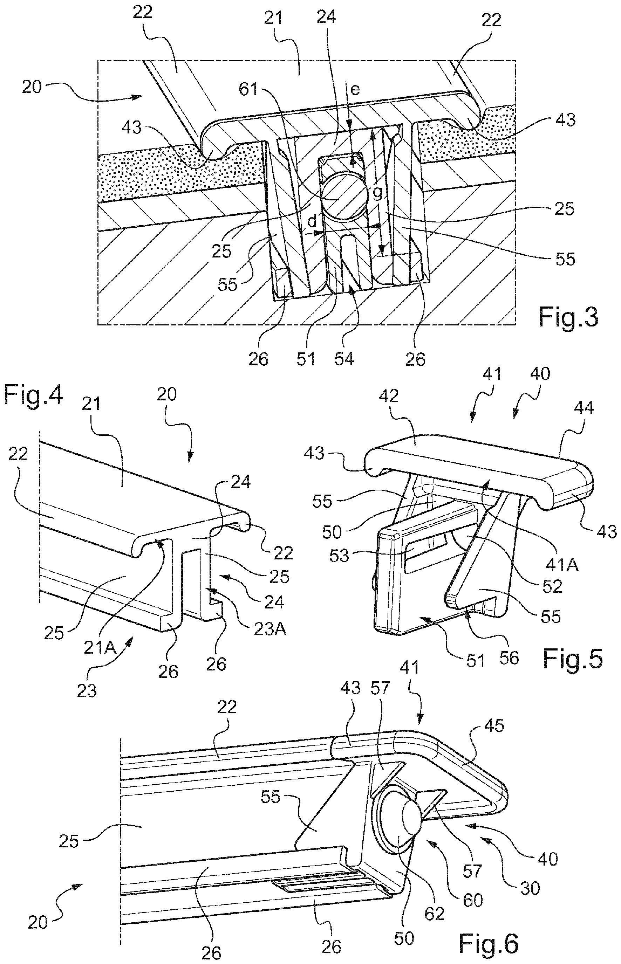

Comme on peut le constater sur la figure 4, chaque piste est constituée d'un profilé 20 réalisé de préférence dans un matériau métallique extrudé tel que l'aluminium.

Ce profilé 20 comporte une semelle plane 21 le long de laquelle les patins peuvent glisser et dont les deux bords latéraux 22 sont inclinés de sorte à s'enfoncer dans le tapis de plancher 3 recouvrant le plancher 1.

Le profilé 20 comporte également un pied de fixation 23, à section transversale en forme de U, comprenant une base 24 accolée à la face inférieure de la semelle 21 ainsi que deux ailes parallèles 25 s'étendant transversalement à la base 24 et à la semelle 21.

Chaque aile 25 est en outre prolongée à son extrémité opposée à la base 24 par un retour d'équerre 26 s'étendant vers l'extérieur parallèlement à la base 24 et à la semelle 21.

Dans leur configuration de service illustrée par la figure 1, les deux pistes 20 sont pourvues à chacune de leurs deux extrémités longitudinales d'un embout d'extrémité 30.

Cet embout 30 se compose d'un corps 40 venu avantageusement de moulage à partir d'un matériau thermoplastique, ainsi que d'une vis 60.

Le corps 40 comporte un toit 41 prévu pour s'étendre dans le prolongement de la semelle 21 après la mise en place de l'embout 30, et présentant une surface frontale d'extrémité 41A destinée à venir se superposer contre celle 21A de la semelle 21.

Afin d'assurer une continuité visuelle optimale, cette surface frontale d'extrémité 41A du toit 41 présente un profil identique à celui de la surface frontale d'extrémité 21A de la semelle 21.

Ce toit 41 comprend un tronçon principal 42 muni de deux bords latéraux 43 et présentant une section transversale constante identique à celle de la semelle 21.

Ce tronçon principale 42 est prolongé par un tronçon de finition 44 présentant un bord périphérique incliné 45 assurant la jonction avec les deux bords latéraux inclinés 43 du tronçon 42.

Le corps 40 comporte également une paroi frontale 50 s'étendant transversalement au toit 41 à proximité de la surface frontale d'extrémité 41A, et apte à venir couvrir la surface frontale d'extrémité 23A du pied de fixation 23 du profilé 20.

Comme illustré sur la figure 5, une cloison 51 s'étend depuis la partie centrale de la paroi frontale 50, à l'opposé du toit 41 et perpendiculairement à ces deux éléments 50, 41.

Cette cloison centrale 51 qui est conformée pour s'introduire entre les deux ailes 25 du profilé 20, présente au niveau de son extrémité proximale une largeur correspondant à la distance d séparant ces ailes 25 de sorte à empêcher tout déplacement latéral du corps 40 vis-à-vis de l'extrémité du profilé 20 après sa mise en place (voir figure 3).

La cloison 51 présente une épaisseur moindre à son extrémité libre de sorte à faciliter l'insertion de ce corps 40 sur l'extrémité du profilé 20, cette épaisseur diminuant avantageusement de manière progressive le long de cette cloison 51.

La cloison 51 est en outre écartée du toit 41 d'une distance correspondant à l'épaisseur e de la base 24 du pied de fixation 23 en U du profilé 20, de sorte que son extrémité supérieure repose contre la face inférieure de cette base 24 après la mise en place de l'embout 30 afin d'empêcher tout soulèvement du corps 40 vis-à-vis de l'extrémité du profilé 20.

La paroi frontale 50 présente par ailleurs un orifice circulaire 52 centré sur le plan longitudinal médian de la cloison 51 et présentant un diamètre légèrement supérieur à la distance d séparant les ailes 25 (figure 5).

Cet orifice 52 est prolongé par un perçage borgne 53 de même diamètre s'étendant le long de la majeure partie de la cloison 51 et formant deux fenêtres latérales dans cette dernière.

Afin de diminuer la quantité de matière nécessaire la fabrication du corps 40, un évidemment 54 est ménagé dans la partie inférieure de la cloison 51 située en dessous de ce perçage 53 (figure 3).

Le corps 40 comporte en outre deux joues latérales 55 s'étendant depuis les deux bords latéraux de la paroi frontale 50 transversalement à cette dernière et de part et d'autre de la cloison centrale 51.

Ces joues 55 qui présentent un profil en forme de nez, s'évasent légèrement en direction du toit 41 en étant systématiquement écartées d'une distance légèrement supérieure au pied de fixation 23 de sorte à ne pas interférer avec ce dernier lors de la mise en place de l'embout 30 sur l'extrémité du profilé 20.

Comme illustré sur la figure 5, les extrémités inférieures des joues 55 (celles opposées au toit 41) forment deux redents longitudinaux 56 parallèles à ce toit 41 et séparés de ce dernier d'une distance correspondant à celle g séparant la semelle 21 du profilé 20 des deux retours d'équerre 26 (figure 3), de sorte à venir reposer contre la face supérieure de ces derniers après la mise en place de l'embout 30 afin d'empêcher tout abaissement du corps 40 vis-à-vis de l'extrémité du profilé 20.

Afin de renforcer la tenue mécanique du corps 40, ce dernier comporte en outre deux nervures latérales triangulaires 57 s'étendant entre la face inférieure du toit 41 et la paroi frontale 50 selon deux plans transversaux à ces deux éléments.

La vis 60 comporte une tige 61 portant un filetage de type auto-taraudant ainsi qu'une tête circulaire 62 surmontant la tige 61 et pourvue d'une empreinte (non représentée sur les figures et par exemple de type plat, cruciforme, Torx® ou Allen®) apte à recevoir l'extrémité correspondante d'un outil de vissage.

La tige 61 présente une longueur inférieure à celle du perçage borgne 53 et un diamètre légèrement inférieur à la distance d séparant les ailes 25 du pied de fixation 23 du profilé 20, tandis que le filetage présente un diamètre légèrement supérieur à cette même distance d (de sorte à générer un taraudage correspondant sur la faces internes de ces ailes 25 lors du vissage de la vis 60) et inférieur au diamètre de l'orifice circulaire 52 de la paroi frontale 50 et du perçage borgne 53 de la cloison 51 (de sorte à ne pas interférer avec cette dernière lors du vissage de la vis 60).

La tête circulaire 62 présente un diamètre supérieur à celui de cet orifice circulaire 52 de sorte à venir en butée contre la paroi frontale 50 du corps 40 après vissage.

On va maintenant décrire succinctement les étapes de montage de l'embout 30 sur le profilé 20.

L'opérateur doit dans un premier temps positionner le corps 40 en regard de l'extrémité de ce profilé 20, puis engager l'extrémité libre de cloison 51 entre les deux ailes 25 et faire coulisser ce corps 40 jusqu'à ce que la surface frontale d'extrémité 41A du toit 41 vienne contre la surface frontale d'extrémité 21A de la semelle 21 de sorte à s'étendre dans son prolongement et assurer la continuité visuelle comme illustré par les figures 2 et 6.

Dans cette position, le corps 40 est bloqué latéralement (la largeur de la portion proximale de la cloison 51 correspondant à la distance d entre les ailes 25) et verticalement (l'extrémité supérieure de cette cloison 51 étant positionnée contre la face inférieure de la base 24 du pied de fixation 23, tandis que les redents 56 sont positionnés contre la face supérieure des deux retours d'équerre 26).

L'opérateur doit ensuite introduire l'extrémité libre de la tige 61 de la vis 60 au travers de l'orifice 52 de la paroi frontale 50 puis l'entrainer à rotation à l'aide d'un outil de vissage électrique de sorte à générer le taraudage des faces internes des ailes 25 du pied support 23.

La tête circulaire 62 de cette vis 60 va ainsi se rapprocher progressivement de la paroi frontale 50 jusqu'à venir buter contre cette dernière tel qu'illustré par les figures 2 et 6.

Dans cette configuration, le corps 40 est ainsi bloqué longitudinalement et sans jeu de sorte à préserver une parfaite continuité entre la semelle 21 de la piste 20 et le toit 41 du corps 40.

Après la mise en place de deux embouts 30 aux deux extrémités de chacune des pistes 20, ces dernières sont ensuite fixées sur des supports de calage en bois 4 ancrées au plancher 1 et disposées localement sous le tapis de plancher 3 dans des évidements correspondants ménagés dans la couche de mousse 5 séparant ce plancher 1 du tapis 3.

Comme illustré par la figure 2, la fixation des pistes 20 sur les supports de calage 4 est assurée par l'intermédiaire de plusieurs vis auto-taraudeuses 70 semblables à la vis 60 et venant se visser verticalement entre les deux ailes 25 du pied de fixation 23.

La section en U du pied de fixation 23 et son orientation particulière permettent ainsi d'assurer à la fois la fixation du corps 40 des embouts 30 aux extrémités de la piste 20 et celle de cette même piste 20 au plancher 1.

L'utilisation d'un embout tel que 30 n'est toutefois pas limitée aux pistes de glissement pour consoles de véhicules automobiles, ce dernier pouvant être monté sur les extrémités de tout profilé comportant une portion à section en forme de U tel que par exemple un rail fixe ou mobile de glissière.

## Revendications

1. Embout d'extrémité pour profilé (20) comportant au moins une portion à section transversale en forme de U (23) comprenant une base (24) et deux ailes parallèles (25) s'étendant transversalement à la dite base (24), ledit embout comportant un corps (40) comprenant une paroi frontale (50) apte à couvrir une surface frontale d'extrémité (23A) de ladite portion en U ;
**caractérisé en ce que** ledit embout comporte un organe de fixation (60) comprenant une tige (61) portant un filetage auto-taraudant et apte à traverser un orifice circulaire (52) ménagé dans ladite paroi frontale (50) pour venir se visser sur les faces internes desdites ailes (25) de la portion en U (23) du profilé (20), ledit organe de fixation (60) comprenant également une tête (62) dotée d'un diamètre supérieur à celui dudit orifice (52) et prévue pour venir en butée contre ladite paroi frontale (50) en fin de vissage.

2. Embout d'extrémité selon la revendication 1, **caractérisé en ce que** ledit corps (40) comporte une cloison (51) s'étendant perpendiculairement à ladite paroi frontale (50) et prévue pour être introduite entre lesdites ailes (25) de la portion en U (23) du profilé (20) ; ladite cloison (51) présentant au niveau de son extrémité proximale une largeur correspondant à la distance (d) séparant lesdites ailes (25).

3. Embout d'extrémité selon la revendication 2, **caractérisé en ce que** ladite cloison (51) présente une épaisseur moindre à son extrémité libre de sorte à faciliter l'insertion dudit corps (40).

4. Embout d'extrémité selon l'une des revendications 2 ou 3, **caractérisé en ce que** ladite cloison (51) présente un perçage borgne (53) prolongeant ledit orifice (52) en formant deux fenêtres latérales dans cette dernière.

5. Ensemble comportant un dit profilé (20) ainsi qu'au moins un embout (30) selon l'une des revendications 2 à 4 monté à l'une des extrémités dudit profilé (20) ; **caractérisé en ce que** ledit profilé (20) comporte une seconde portion (21) surplombant la base (24) de ladite portion en U (23), et **en ce que** ledit embout (30) comporte un toit (41) s'étendant dans le prolongement de ladite seconde portion (21) du profilé (20) et présentant une surface frontale d'extrémité (41A) accolée à celle (21A) de ladite seconde portion (21).

6. Ensemble selon la revendication 5, **caractérisé en ce que** ladite surface frontale d'extrémité (41A) du toit (41) présente un profil identique à celui de ladite surface frontale d'extrémité (21A) de la seconde portion (21).

7. Ensemble selon l'une des revendications 5 ou 6, **caractérisé en ce que** l'extrémité supérieure de ladite cloison (51) repose contre la face inférieure de ladite base (24) de la portion en U (23) du profilé (20).

8. Ensemble selon l'une des revendications 5 à 7, **caractérisé en ce que** chaque dite aile (25) de la portion en U (23) du profilé (20) est prolongée à son extrémité opposée à ladite base (24) par un retour d'équerre (26) s'étendant vers l'extérieur et parallèlement à cette dernière, ledit embout (30) comportant en outre deux joues latérales (55) s'étendant transversalement depuis ladite paroi frontale (50) dudit corps (40), de part et d'autre de ladite cloison centrale (51), et dont les extrémités inférieures forment deux redents (56) reposant contre la face supérieure desdits retours d'équerre (26).

9. Ensemble selon l'une des revendications 5 à 8, **caractérisé en ce que** ledit corps (40) de l'embout (30) comporte des nervures de renfort (57) s'étendant entre la face inférieure dudit toit (41) et ladite paroi frontale (50).

10. Ensemble selon l'une des revendications 5 à 8, **caractérisé en ce que** ledit profilé constitue une piste de glissement (20) pour console centrale (10) d'habitacle de véhicule automobile.

## Patentansprüche

1. Endstück für Profil (20), das mindestens einen Abschnitt mit Querschnitt in U-Form (23) umfasst, der eine Basis (24) und zwei parallele Rippen (25) umfasst, die sich quer zu der Basis (24) erstrecken, wobei das Stück einen Körper (40) umfasst, der eine Vorderwand (50) umfasst, die geeignet ist, eine Endvorderoberfläche (23A) des U-Abschnitts abzudecken;
**dadurch gekennzeichnet, dass** das Stück ein Befestigungselement (60) umfasst, das einen Schaft (61) umfasst, der ein selbstschneidendes Gewinde trägt, und der geeignet ist, eine kreisförmige Öffnung (52) zu durchqueren, die in der Vorderwand (50) angelegt ist, um sich auf die internen Seiten der Rippen (25) des U-Abschnitts (23) des Profils (20) zu schrauben, wobei das Befestigungselement (60) einen Kopf (62) umfasst, der mit einem Durchmesser versehen ist, der größer ist als der der Öffnung (52), und vorgesehen ist, um gegen die Vorderwand (50) am Ende des Schraubens zum Anschlag zu kommen.

2. Endstück nach Anspruch 1, **dadurch gekennzeichnet, dass** der Körper (40) eine Wand (51) umfasst, die sich senkrecht zu der Vorderwand (50) erstreckt und vorgesehen ist, um zwischen die Rippen (25) des U-Abschnitts (23) des Profils (20) eingeführt zu werden; wobei die Wand (51) im Bereich ihres proximalen Endes eine Breite aufweist, die dem Abstand (d), der die Rippen (25) trennt, entspricht.

3. Endstück nach Anspruch 2, **dadurch gekennzeichnet, dass** die Wand (51) eine Stärke aufweist, die an ihrem freien Ende derart kleiner ist, dass das Einsetzen des Körpers (40) erleichtert wird.

4. Endstück nach einem der Ansprüche 2 oder 3, **dadurch gekennzeichnet, dass** die Wand (51) eine Blindbohrung (53) aufweist, die die Öffnung (52) verlängert, indem sie zwei seitliche Fenster in dieser Letzteren bildet.

5. Anordnung, die ein Profil (20) sowie mindestens ein Stück (30) nach einem der Ansprüche 2 bis 4 umfasst, der an eines der Enden des Profils (20) montiert ist; **dadurch gekennzeichnet, dass** das Profil (20) einen zweiten Abschnitt (21) umfasst, der über der Basis (24) des U-Abschnitts (23) liegt, und dass das Stück (30) ein Dach (41) umfasst, das sich in der Verlängerung des zweiten Abschnitts (21) des Profils (20) erstreckt und eine Endvorderoberfläche (41A) aufweist, die an die (21A) des zweiten Abschnitts (21) angefügt ist.

6. Anordnung nach Anspruch 5, **dadurch gekennzeichnet, dass** die Endvorderoberfläche (41A) des Dachs (41) ein Profil aufweist, das mit dem der Endvorderoberfläche (21A) des zweiten Abschnitts (21) identisch ist.

7. Anordnung nach einem der Ansprüche 5 oder 6, **dadurch gekennzeichnet, dass** das obere Ende der Wand (51) gegen die untere Fläche der Basis (24) des U-Abschnitts (23) des Profils (20) ruht.

8. Anordnung nach einem der Ansprüche 5 bis 7, **dadurch gekennzeichnet, dass** jede Rippe (25) des U-Abschnitts (23) des Profils (20) an ihrem Ende, das der Basis (24) entgegengesetzt ist, durch einen Winkelrücklauf (26) verlängert ist, der sich nach außen und parallel zu dieser Letzteren erstreckt, wobei das Stück (30) außerdem zwei seitliche Backen (55) umfasst, die sich quer ausgehend von der Vorderwand (50) des Körpers (40) zu beiden Seiten der zentralen Wand (51) erstrecken, und deren untere Enden zwei Stufen (56) bilden, die gegen die obere Fläche der Winkelrückläufe (26) ruhen.

9. Anordnung nach einem der Ansprüche 5 bis 8, **dadurch gekennzeichnet, dass** der Körper (40) des Stücks (30) Verstärkungsrippen (57) umfasst, die sich zwischen der unteren Fläche des Dachs (41) und der Vorderwand (50) erstrecken.

10. Anordnung nach einem der Ansprüche 5 bis 8, **dadurch gekennzeichnet, dass** das Profil eine Gleitbahn (20) für zentrale Kraftfahrzeug-Fahrgastzellenkonsole (10) bildet.

## Claims

1. An end cap for a profile (20) comprising at least one portion with a U-shaped cross-section (23), including a base (24) and two parallel wings (25) extending transversely to the said base (24), said cap comprising a body (40) including a front wall (50) able to cover an end front surface (23A) of said U-shaped portion;
**characterized in that** said cap comprises an attachment member (60) including a rod (61) carrying a self-tapping thread and able to pass through a circular opening (52) arranged in said front wall (50) to come to be screwed on the internal faces of said wings (25) of the U-shaped portion (23) of the profile (20), said attachment member (60) also including a head (62) provided with a diameter greater than that of said opening (52) and provided to come to abut against said front wall (50) at the end of screwing.

2. The end cap according to Claim 1, **characterized in that** said body (40) comprises a partition (51) extending perpendicularly to said front wall (50) and provided to be introduced between said wings (25) of the U-shaped portion (23) of the profile (20); said partition (51) having at the level of its proximal end a width corresponding to the distance (d) separating said wings (25).

3. The end cap according to Claim 2, **characterized in that** said partition (51) has a lesser thickness at its free end, so as to facilitate the insertion of said body (40).

4. The end cap according to one of Claims 2 or 3, **characterized in that** said partition (51) has a blind bore (53) extending said opening (52), forming two lateral windows in the latter.

5. An assembly comprising a said profile (20) and at least one cap (30) according to one of claims 2 to 4 mounted at one of the ends of said profile (20); **characterized in that** said profile (20) comprises a second portion (21) overhanging the base (24) of said U-shaped portion (23), and **in that** said cap (30) comprises a roof (41) extending in the extension of said second portion (21) of the profile (20) and having an end front surface (41A) adjoined to that (21A) of said second portion (21).

6. The assembly according to Claim 5, **characterized in that** said end front surface (41A) of the roof (41) has a profile identical to that of said end front surface (21A) of the second portion (21).

7. The assembly according to one of Claims 5 or 6, **characterized in that** the upper end of said partition (51) rests against the lower face of said base (24) of the U-shaped portion (23) of the profile (20).

8. The assembly according to one of Claims 5 to 7, **characterized in that** each said wing (25) of the U-shaped portion (23) of the profile (20) is extended at its end opposite said base (24) by a right-angle (26) extending towards the exterior and parallel to the latter, said cap (30) further comprising two lateral cheeks (55) extending transversely from said front wall (50) of said body (40), on either side of said central partition (51), and the lower ends of which form two steps (56) resting against the upper face of said right-angles (26).

9. The assembly according to one of Claims 5 to 8, **characterized in that** said body (40) of the cap (30) comprises reinforcement ribs (57) extending between the lower face of said roof (41) and said front wall (50) .

10. The assembly according to one of Claims 5 to 8, **characterized in that** said profile constitutes a sliding track (20) for a central console (10) of a passenger compartment of a motor vehicle.
